# EUROPEAN PATENT APPLICATION

(11) **EP 3 767 275 A1**
(43) Date of publication of application: **20.01.2021**
(21) Application number: 19784885.6
(22) Date of filing: 01.02.2019
(51) Int. Cl.: G01N 19/04

(54) **TESTING DEVICE FOR THE IN SITU DETERMINATION OF THE FRACTURE TOUGHNESS OF GLUED JOINTS**

(30) Priority: 09.04.2018 ES 201830349
(71) Applicant: Universidad De Sevilla, 41013 Sevilla (ES)
(72) Inventor: CAÑAS DELGADO, José, 41013 Sevilla (ES); PARÍS CARBALLO, Federico, 41013 Sevilla (ES); TÁVARA MENDOZA, Luis, 41013 Sevilla (ES); BLÁZQUEZ GÁMEZ, Antonio, 41013 Sevilla (ES); ESTÉFANI MORALES, Alejandro, 41013 Sevilla (ES); SANTACRUZ RODRÍGUEZ, Gloria, 41013 Sevilla (ES); STÖVEN, Timo, 41013 Sevilla (ES)
(74) Representative: Pons
(86) International application number: PCT/ES2019/070053
(87) International publication number: WO 2019/197691

(57) **Abstract**

The invention relates to a testing device that can be transported and used in situ on a structure to be tested to determine the resistance thereof to peeling. The device fundamentally comprises: a drum (2) with attachment elements (1) for attaching to a specimen (100) that is to be peeled from a hybrid adhesive joint of a structure; a movable carriage (4) on which the drum (2) is mounted; a frame (6) along which the drum (2) moves; and an actuation mechanism that determines the linear movement of the carriage (4) or the rotational movement of the drum (2) and which, by the reaction of the specimen (100), determines, respectively, the rotation of the drum (2) or the linear displacement of the carriage (4).

## Description

### OBJECT OF THE INVENTION

The present invention relates to a testing device of particular interest in the aerospace sector.

The testing device object of this invention is portable and versatile, which allows it to be transported and used in situ on an actual part where the glued joint that is to be evaluated is located, thereby reducing costs, time, and uncertainties.

### BACKGROUND OF THE INVENTION

Ensuring the quality of a glued joint is a concern of the scientific community and industry, wherein said concern is particularly noted in the aerospace sector in which the use of composite-composite glued joints is constantly on the rise.

More and more composite materials, whose properties, such as specific density, mechanical properties, complex geometry adaption capacity, absence of corrosion, reduced maintenance costs, thermal and sound insulation, are well known, are employed in structures used in aerospace components.

The manufacturing processes are extremely expensive, so the aerospace composite material industry is moving towards quicker and more cost-competitive methods involving the use of glued joints instead of riveted joints.

The quality of the joint is evaluated by determining the interlaminar fracture toughness or peel load. Today, these properties are obtained with specific tests performed in laboratory under standardised methods.

Current tests consist of obtaining the resistance of a laminate or a joint to peeling, which is directly related to interlaminar fracture toughness, these tests being governed by various applicable standards, such as ASTM D1781 or ASTM D5528.

The main problems existing in the tests performed under the standard are as follows:
- the need to generate specific specimens to perform the test in a laboratory, determining the need to manufacture parts in addition to those required for making the corresponding structure.
- Whether or not the glued structural part is suitable is not immediately known, and furthermore the specimen to be tested is obtained from another 002E part.

There are some research lines relating to test methods for the evaluation of interlaminar fracture toughness, but they are carried out as one-off research that is highly centred on improving a specific aspect.

Fracture mechanisms are widely studied in scientific research, so a large amount of information can be found on the theoretical concepts of both the mechanisms themselves and the crack propagation processes in each of the mechanisms. However, providing a test that is easy to perform and can be carried out in situ, with results that are easily interpreted, is still an object of interest of the scientific community.

### DESCRIPTION OF THE INVENTION

The testing device proposed by the present invention enables mechanical properties to be obtained in situ directly on the structures to be tested formed by composite materials joined by adhesive joints, unlike the currently existing test methods which require manufacturing specimens or performing the test in a laboratory.

The testing device stands out fundamentally due to its portability and versatility, being capable of adapting to various required conditions and geometries, where resistance to peeling can therefore be evaluated in actual situations, preventing the need to transfer the test conditions to a laboratory and thereby eliminating uncertainties that may be gradually generated. This feature considerably reduces operation times as the validation of the element can be performed in situ, only requiring the device and a specialised operator, where the validation of the element can be performed right after manufacturing the element.

Costs are thereby reduced as it would not be necessary to manufacture a surplus of the structure for delivery to the laboratory, and time is reduced as the device enables the test to be performed at the same time in which it is used on the structure and it would not be necessary to wait for laboratory results.

The device fundamentally comprises a rotary drum provided with attachment elements that are coupled on the structure to be tested in an area defined as a specimen, which drum, during rotation thereof, causes the controlled detachment/stripping of the specimen, the actual resistance of the structure to peeling being obtained, with this resistance evaluation being performed in accordance with the methods existing at the level of specimens generated under the applicable standard.

The device incorporates a frame and the mentioned drum is mounted in a carriage which moves, guided by at least one guide arranged in the frame, wherein the frame stands out fundamentally due to the fact that the drum moves and protrudes from one side or from a longitudinal opening of said frame. This configuration enables the device, directly supported by the frame, to be positioned on the structure to be tested or the device is supported, with the help of support legs, on the structure to be tested with the drum protruding internally through the opening of the frame and in contact with the structure from which the specimen will be extracted.

The device also comprises an actuation mechanism that determines the linear movement of the carriage or rotational movement of the drum, and which, by the reaction of the specimen, determines, respectively, the rotation of the drum or the linear displacement of the carriage.

In a possible embodiment, the rotation of the drum is provided through a small electric motor which, by means of gears or by means of a reduction gear, transfer the movement to the drum. The peeling of the specimen will cause the drum to move horizontally, so the device is designed to allow said movement.

In another possible embodiment of the device, the displacement of the device is controlled and the rotation of the drum will be induced by the inertia required to cause peeling in the sample. In that case, the motor would not cause the rotation of the drum, but rather a longitudinal displacement of the device.

In order to faithfully evaluate the resistance of the specimen to interlaminar fracture, the device is capable of measuring and recording load introduction during the test. This process is carried out by means of using one or two torque-measuring cell/cells.

The device evaluates and applies the desired loads, but in turn has an easy-to-handle interface and control system, so that a specialised operator can use same without requiring too much learning time.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:
Figure 1 shows a perspective view of a first embodiment of the testing device.
Figure 2 shows a detailed perspective view of the first embodiment of the testing device.
Figure 3 shows a perspective view of a second embodiment of the testing device.
Figure 4 shows a side view of a second embodiment of the testing device.
Figure 5 shows a perspective view of a third embodiment of the testing device.
Figure 6 shows an elevational view of a third embodiment of the testing device.
Figure 7 shows a schematic view in which the drum is seen in motion, stripping off the upper component of a specimen made of a hybrid material joined by means of an adhesive.
Figure 8 shows a perspective view of a fourth embodiment of the testing device.
Figure 9 shows an elevational view of the fourth embodiment of the testing device.
Figure 10 shows an exploded view of the fourth embodiment of the testing device.

### PREFERRED EMBODIMENT OF THE INVENTION

In view of the figures, four different embodiments of the testing device object of this invention for the determination of the resistance of hybrid adhesive joints made of composite materials to peeling are described below.

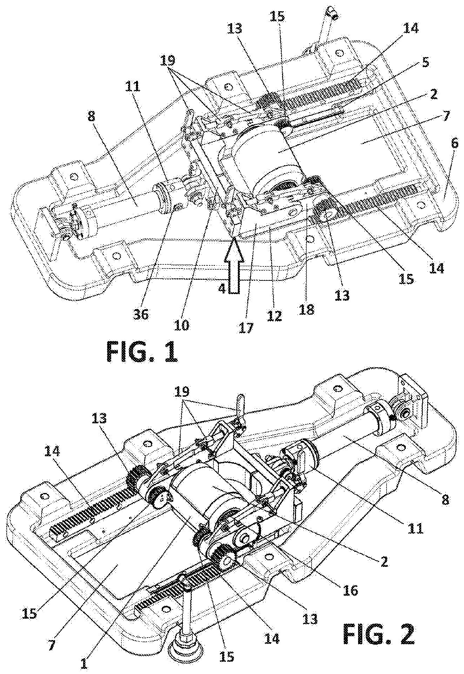

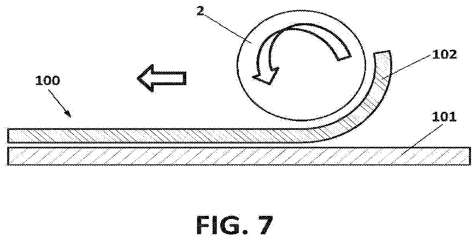

It can be seen in the figures that any of the types of testing devices fundamentally comprises: a drum (2) with attachment elements (1), as shown in Figure 2, for attaching to a specimen (100) that is to be peeled from the hybrid adhesive joint, see Figure 7, a movable carriage (4) on which the drum (2) is mounted, linear guides (5) facilitating the guided displacement of the carriage (4), a frame (6) in which there is mounted at least one linear guide (5) on which the drum (2) moves, an actuation mechanism that determines the linear movement of the carriage (4) or rotational movement of the drum (2), and which, by the reaction of the specimen (100), determines, respectively, the rotation of the drum (2) or the linear displacement of the carriage (4).

In exemplary embodiments like the ones shown in Figures 1 to 6, the frame (6) additionally comprises a longitudinal opening (7) in which the drum (2) moves. In another exemplary embodiment like the one shown in Figures 7 to 11, the drum (2) moves suspended from the frame (6) on one side thereof.

Additionally, at least one force measuring element (11) and one displacement capturing element (36), whereby the parameters that enable obtaining the peeling or interlaminar fracture toughness of the material are measured, are mounted in the device. In one exemplary embodiment, the force measuring element (11) can be a static torque sensor.

According to a first embodiment of the testing device depicted in Figures 1 and 2, the actuation mechanism comprises a centred linear actuator (8), which is attached to the carriage (4) and confers a linear movement thereto, wherein the carriage (4) has a crossbar (10) on which the actuator (8) is attached, with two side flanges (12) emerging therefrom; the actuation mechanism also comprises pinions (13) mounted in the carriage (4), preferably in the side flanges (12), moving on racks (14) attached to the frame (6) in rotation, and first pulleys (15) associated with each pinion (13) transmitting the movement of the pinions (13) to second pulleys (16) linked to the drum (2) by means of a non-depicted drive belt.

In this case, the longitudinal movement of the actuator (8) determines the movement of the carriage (4), in which the drum (2) is mounted, between the two side flanges (12), such that the specimen (100), schematically depicted in Figure 7, which is attached to the drum (2) and pulled by the drum (2) rotating in response to the force applied on the specimen (100), is stripped or peeled off.

Figure 7 schematically depicts a specimen (100) made of a hybrid material formed by a lower component (101) and an upper component (102) joined by means of an adhesive, in which it is can be seen that, during its movement, the drum (2) strips the upper component (102) from the lower component to which it was adhered, thereby peeling the specimen (100).

Additionally, it has been envisaged in the first embodiment of the testing device that each of the side flanges (12) can be formed by respective arms (17, 18), a swivelling front arm (18) linked to the pinion (13) and a rear arm (17) to which the front arm (18) is articulated, wherein the front arm (18) is associated with a first disengaging mechanism (19) which enables the pinion (13) to be disengaged from the rack (14), allowing the free rotation of the drum (2) to facilitate the positioning of the specimen (100).

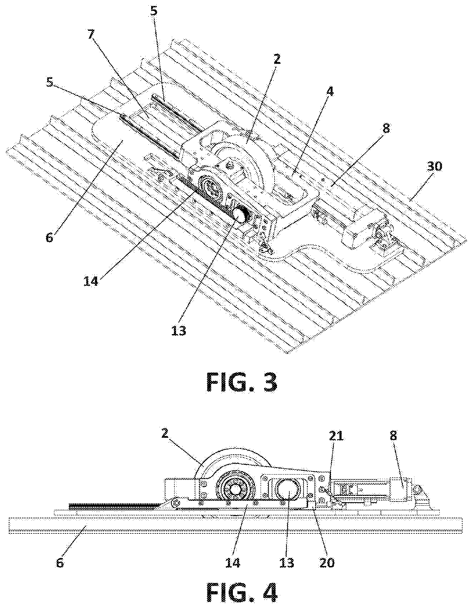

A second possible embodiment of the invention of the testing device, depicted in Figures 3 and 4, used on an element (30) formed by a hybrid adhesive joint from which the specimen (100) will be extracted has been envisaged, in which an actuation mechanism is mounted, which is formed, in this case, by a single linear side actuator (8) acting on one side of the carriage (4) and there is associated with the other side of the carriage (4) a pinion (13) moving on a rack (14) attached to the frame (6), and having a pulley (15) associated with the pinion (13) transmitting the movement of the pinion (13) to a pulley (16) linked to the drum (2) by means of the corresponding non-depicted drive belt.

Like in the preceding case, the longitudinal movement of the linear actuator (8) determines the movement of the carriage (4), such that the specimen (100) attached to the drum (2) and pulled by the drum (2) rotating in response to the force applied on the specimen (100), is stripped or peeled off in the same manner described for the first embodiment of the first testing device, as seen in Figure 7.

In this second embodiment, the testing device incorporates a second disengaging mechanism (21) associated with a wedge (20) depicted in Figure 4, which is longitudinally movable on the frame (6), wherein the rack (14) swivels with respect to the frame (6) at one end and is shown to be supported on the wedge (20) at the other end, such that when the disengaging mechanism (21) is acted on from that position, the wedge (20), on which the rack (14) is no longer supported, moves with the rack being disengaged from the pinion (13).

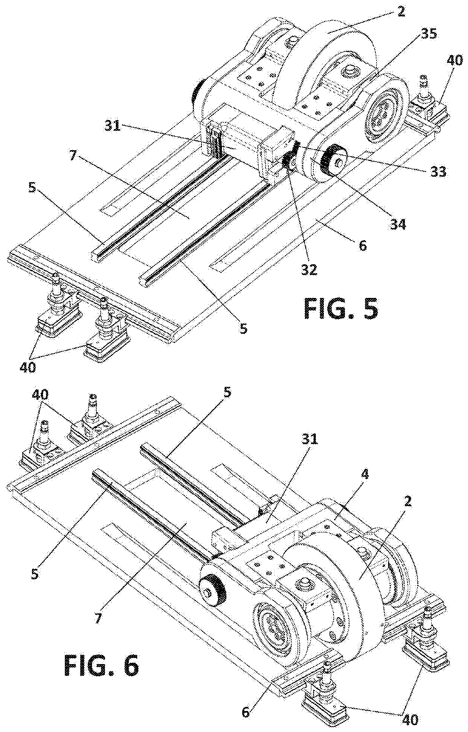

A third possible embodiment of the invention of the testing device depicted in Figures 5 and 6 has been envisaged, in which, unlike the other two embodiments, the actuation mechanism determines the rotational movement of the drum (1), and by the reaction of the specimen, the linear displacement of the carriage (4) is caused.

In this case, the actuation mechanism is mounted in the carriage (4) and formed by a motor (31), a pinion (32) activated by the motor (31) acting on a cogged wheel (33) to which there is linked a third pulley (34) transmitting the movement to a fourth pulley (35) associated with the drum (2), such that the movement of the motor (31) determines the movement of the drum (2) to which the specimen (100) is attached. The movement of stripping the specimen (100) will cause the movement of the carriage (4), by the reaction of the specimen (100), in the same direction in which the movement of the motor (31) is applied.

The testing device may additionally incorporate height-adjustable support legs (40) associated with the frame (6), as seen, for example, in Figures 5 and 6, which enable the device to be positioned on the structure to be tested such that the drum (2) comes into contact with the surface from which the specimen (100) will be extracted.

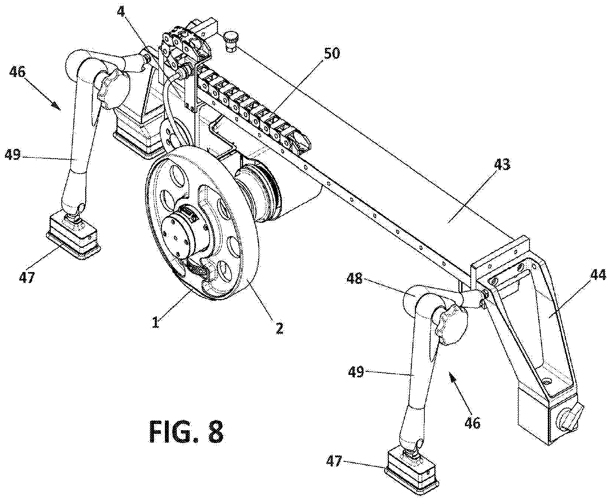

A fourth exemplary embodiment shown in Figures 8 to 10 has been depicted, in which the frame (6) comprises at least one upper horizontal beam (43) in which the guide is arranged, and beam supports (44) configured for supporting said beam, such that the carriage (4) moves along the beam (43) suspended thereon. The carriage (4) moves by means of guided displacement in the horizontal direction, and since it is suspended on one side of the frame (6), the drum (2) has full access to the hybrid adhesive joint under study.

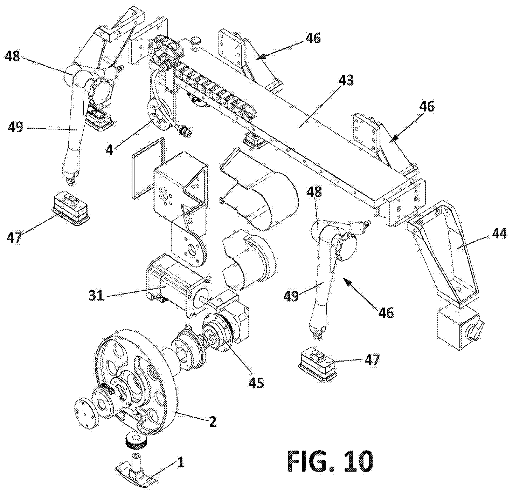

The actuation mechanism of the device may comprise a motor (31) mounted in the carriage (4) and a reduction gear (45) also mounted in the carriage (4) and arranged between the motor (31) and the drum (2). This embodiment can be seen, for example, in Figure 10.

Both the rotation of the drum (2) and the displacement of the carriage (4) along the guide of the mount are actuated by the motor (31). Said motor (31) is mounted in the carriage (4) and linked to the reduction gear (45) which is in turn linked to the drum (2) to control the rotation thereof. Moreover, in this embodiment, the device comprises a drive chain (50) mounted in the frame (6) and to the motor (31) such that it controls the displacement of the carriage (4) by means of the actuation of the motor (31). Therefore, when the carriage (4) is to be moved along the guide, the drive chain (50) causing said displacement is actuated with the motor (8).

In this sense, when the motor (31) actuates the drive chain (50), it determines the movement of the carriage (4), such that the specimen (100) attached to the drum (2) and pulled by the drum (2) rotating in response to the force applied on the specimen (100), is stripped or peeled off. The possibility of the actuation mechanism determining the rotational movement of the drum (1), and by the reaction of the specimen, causes the linear displacement of the carriage (4), has also been envisaged. The movement of stripping the specimen (100) will cause the movement of the carriage (4), by the reaction of the specimen (100), in the same direction in which the movement of the motor (31) is applied.

To ensure proper stability during the test, the device may comprise additional legs (46), in addition to the beam supports (44). Figure 8 shows an exemplary embodiment in which it comprises two additional articulated legs (46). Said additional legs (46) are joined, in this case, to the frame (46) preferably in the beam (43) and comprise a first section (48) joined to the beam (43) with rotation possibility and a second section (49) joined to the first section (48) with swivelling possibility.

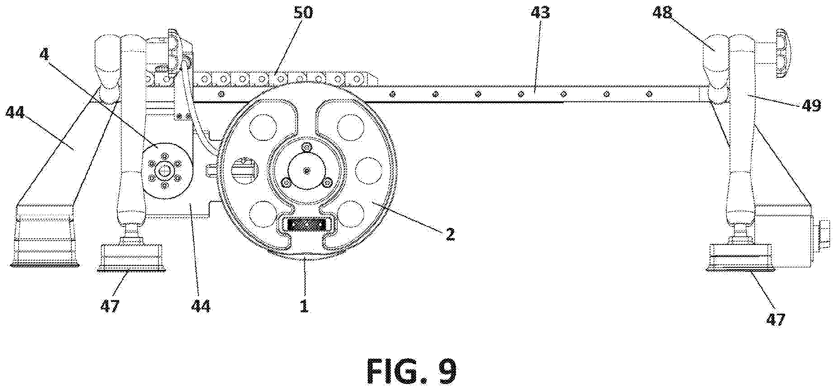

Figure 9 shows an exemplary embodiment in which the device comprises other two additional legs (46) which are not articulated and are arranged facing the additional articulated legs (46) on the other side of the frame (6).

In the additional articulated legs (46), as a result of the degrees of freedom of the joints between the first section (48) and the frame (6) and between the first section (48) and the second section (49), the final position of the additional legs (46) can be adjusted to enable adapting it to the specific needs of the area of the adhesive joint that will be studied.

The additional legs (46) also comprise feet (47) at the free end of the second section (49) for supporting same. The additional legs (46) can be supported a larger or smaller distance with respect to one another and a larger or smaller distance with respect to the beam supports (44). The height at which the legs are supported can also be adjusted to ensure that the drum (2) comes into contact with the surface from which the specimen (100) will be extracted.

In one exemplary embodiment, the drum (2) exhibits possibility of vertical movement with respect to the carriage (4), such that said drum (2) can change its vertical movement even during the test.

## Claims

1. A testing device for the in situ determination of the fracture toughness of glued joints, **characterised in that** it comprises:
a drum (2) with attachment elements (1) intended for being attached to a specimen (100) that is to be peeled from the hybrid adhesive joint,
a movable carriage (4) on which the drum (2) is mounted,
at least one linear guide (5) facilitating the guided displacement of the carriage (4),
a frame (6) in which there is mounted the at least one linear guide (5) in which the drum (2) moves, and
an actuation mechanism that determines the linear movement of the carriage (4) or rotational movement of the drum (2) and which, by the reaction of the specimen (100), determines, respectively, the rotation of the drum (2) or the linear displacement of the carriage (4).

2. The testing device for the in situ determination of the fracture toughness of glued joints according to claim 1, **characterised in that** the frame (6) comprises a longitudinal opening (7) in which the drum (2) moves.

3. The testing device for the in situ determination of the fracture toughness of glued joints according to claim 1, **characterised in that** the actuation mechanism comprises:
a centred linear actuator (8) which is attached to the carriage (4) conferring a linear movement thereto,
pinions (13) mounted in the carriage (4),
racks (14) attached to the frame (6) on which the pinions (13) move in rotation,
first pulleys (15) associated with each pinion (13),
second pulleys (16) linked to the drum (2) which receive the movement of the first pulleys (15) by means of a drive belt.

4. The testing device for the in situ determination of the fracture toughness of glued joints according to claim 2, **characterised in that** the carriage (4) has a crossbar (10) on which the actuator (8) is attached, with two side flanges (12) in which the pinions (13) are mounted emerging therefrom.

5. The testing device for the in situ determination of the fracture toughness of glued joints according to claim 4, **characterised in that** each of the side flanges (12) is formed by respective arms (17, 18), a swivelling front arm (18) linked to the pinion (13) and a rear arm (17) to which the front arm (18) is articulated, wherein the front arm (18) is associated with a first disengaging mechanism (19) which enables the pinion (13) to be disengaged from the rack (14), allowing the free rotation of the drum (2) to facilitate the positioning of the specimen (100).

6. The testing device for the in situ determination of the fracture toughness of glued joints according to claim 1, **characterised in that** the actuation mechanism comprises:
a single linear side actuator (8) acting on one side of the carriage (4),
a pinion (13) associated with the other side of the carriage (4),
a rack (14) attached to the frame (6) on which the pinion (13) moves and rotates,
a first pulley (15) associated with the pinion (13), and
a second pulley (16) linked to the drum (2) which receive the movement of the first pulleys (15) by means of a drive belt.

7. The testing device for the in situ determination of the fracture toughness of glued joints according to claim 6, **characterised in that** it additionally comprises a second disengaging mechanism (21) associated with a wedge (20) longitudinally movable on the frame (6), wherein the rack (14) swivels with respect to the frame (6) at one end and is supported on the wedge (20) at the other end when the pinion (13) engages the rack (14) and is no longer supported on the wedge (20) when the wedge (20) moves with the pinion (13) of the rack (14) being disengaged.

8. The testing device for the in situ determination of the fracture toughness of glued joints according to claim 1, **characterised in that** it additionally comprises height-adjustable support legs (40) associated with the frame (6).

9. The testing device for the in situ determination of the fracture toughness of glued joints according to claim 1, **characterised in that** it additionally comprises at least one force measuring element (11) or one displacement capturing element (36) for the specimen.

10. The testing device for the in situ determination of the fracture toughness of glued joints according to claim 1, **characterised in that** the mount comprises at least one upper horizontal beam (43), in which the guide is arranged, and beam supports (44) configured for supporting said beam, such that the carriage (4) moves along the beam (43) suspended thereon.

11. The testing device for the in situ determination of the fracture toughness of glued joints according to claim 1, **characterised in that** it comprises a motor (31) mounted in the carriage (4) and a reduction gear (45) also mounted in the carriage (4) and arranged between the motor (31) and the drum (2).

12. The testing device for the in situ determination of the fracture toughness of glued joints according to claim 11, **characterised in that** it comprises a drive chain (50) mounted in the frame (6) and to the motor (31) such that it controls the displacement of the carriage (4) by means of the actuation of the motor (31).

13. The testing device for the in situ determination of the fracture toughness of glued joints according to claim 10, **characterised in that** additional legs (46) joined to the frame (6) comprise feet (47) that are arranged a specific distance from the beam supports (44).

14. The testing device for the in situ determination of the fracture toughness of glued joints according to claim 13, **characterised in that** at least one of the additional legs (46) is articulated and comprises at least a first section (48) and a second section (49) joined in a swivelling manner to one another.

15. The testing device for the in situ determination of the fracture toughness of glued joints according to claim 14, **characterised in that** the first section (48) is joined to the frame (6) with rotation possibility.

16. The testing device for the in situ determination of the fracture toughness of glued joints according to claim 1, **characterised in that** the attachment element (1) is a manually operated grip.

17. The testing device for the in situ determination of the fracture toughness of glued joints according to claim 1, **characterised in that** the drum (2) exhibits possibility of vertical movement with respect to the carriage (4).

18. The testing device for the in situ determination of the fracture toughness of glued joints according to claim 9, **characterised in that** the force measuring element (11) is a static torque sensor configured for determining the torque exerted by the drum (2) on the specimen (100).
